# EUROPEAN PATENT APPLICATION

(11) **EP 4 628 249 A1**
(43) Date of publication of application: **08.10.2025**
(21) Application number: 24763637.6
(22) Date of filing: 15.02.2024
(51) Int. Cl.: B23Q 3/06, B23Q 3/00, B25B 5/04, F16B 2/16

(54) **CLAMP DEVICE**

(30) Priority: 27.02.2023 JP 2023028820
(71) Applicant: Kosmek Ltd., Kobe-shi, Hyogo 651-2241 (JP)
(72) Inventor: HARUNA, Yosuke, Kobe-shi, Hyogo 651-2241 (JP)
(74) Representative: Dolleymores
(86) International application number: PCT/JP2024/005319
(87) International publication number: WO 2024/181154

(57) **Abstract**

A clamp device includes: an operating rod (14) which is inserted into a supporting cylinder member (4) that is part of the housing (1), which has a wedge portion (17) formed at a leading end portion, and which is configured to move the clamp rod (9) toward a base end side in the axial direction; and a biasing member (e.g., a spring 21) which is provided in a cylindrical hole (12) of the clamp rod (9) and is configured to move the clamp rod (9) toward the leading end side in the axial direction. The clamp device further includes a wedge mechanism consisting of a wedge surface 17a (wedge portion 17), an engaging member (e.g., a ball 18), and a receiving surface 20.

## Description

### [Technical Field]

The present invention relates to a clamp device.

### [Background Art]

An example of such a clamp device is described in Patent Literature 1. The clamp device (automatic clamp device) of the known art is structured as follows.

The clamp device consists of members such as a cylinder that houses a piston and a piston rod, a spring that returns the piston rod, and a unit for converting and transmitting the force of the piston rod returned by the spring into an action of the clamp arm in a clamping direction. The unit for conversion and transmission consists of, for example, a cam groove formed in the piston rod and a ram.

Unclamping drive of the above-described clamp device uses high-pressure fluid, and the high-pressure fluid is supplied to a cylinder chamber each time the unclamping drive is performed. The high-pressure fluid is either pressure oil or compressed air.

### [Citation List]

### [Patent Literatures]

[Patent Literature 1] Japanese Utility Model Publication No. S59-191225

### [Summary of Invention]

### [Technical Problem]

When a large number of the above-described clamp devices are provided, a facility for supplying the high-pressure fluid is required to be large. Furthermore, a large number of complicated piping installations are required to supply and discharge the high-pressure fluid. These requirements are not preferable in consideration of energy saving and environment protection. Therefore, preferably, high-pressure fluid is not used as a driving source.

An object of the present invention is to provide a clamp device which is driven without needing high-pressure fluid.

### [Solution to Problem]

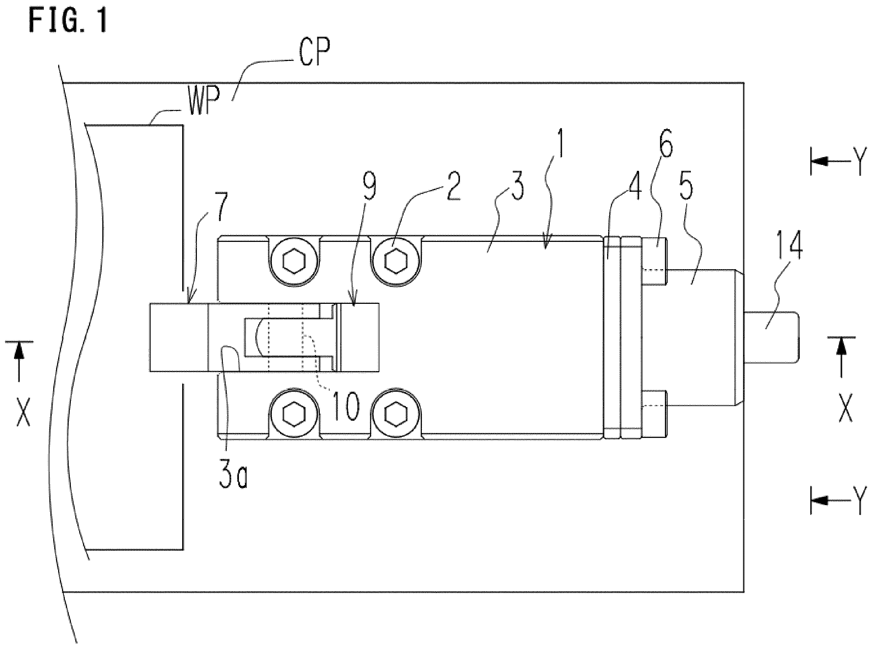

In order to achieve the above object, a clamp device according to the present invention is structured as follows, for example, as shown in FIG. 1 to FIG. 4.
(1) A clamp device disclosed in the subject application includes: a housing 1; a clamp rod 9 which is inserted into a housing main body 3 of the housing 1 to be movable in an axial direction, the clamp rod 9 having a cylindrical hole 12 extending in the axial direction; a clamp arm 7 which is attached to a leading end portion of the clamp rod 9; an operating rod 14 which is inserted into a supporting cylinder member 4 that is part of the housing 1, which has a wedge portion 17 formed at a leading end portion, and which is configured to move the clamp rod 9 toward a base end side in the axial direction; supporting holes 13c which are formed in a cylindrical wall of the supporting cylinder member 4 inserted into the cylindrical hole 12, at predetermined intervals in a circumferential direction; an engaging member 18 which is inserted into each of the supporting holes 13c; a wedge surface 17a which is formed on the outer circumference of the wedge portion 17 to correspond to the engaging member 18, the wedge surface 17a being inclined such that a leading end side of the wedge surface 17a is close to the axial center of the operating rod 14; a receiving surface 20 which is formed in the cylindrical hole 12 to correspond to the engaging member 18, the receiving surface 20 being inclined such that a part of the receiving surface 20, which is on the base end side of the clamp rod 9, is close to the axial center of the clamp rod 9 as compared to a part of the receiving surface 20, which is on the leading end side of the clamp rod 9; and a biasing member 21 which is provided in the cylindrical hole 12 and is configured to move the clamp rod 9 toward the leading end side in the axial direction. The inclination angle α of the wedge surface 17a relative to the axial direction is arranged to be smaller than the inclination angle β of the receiving surface 20 relative to the axial direction.

In the clamp device disclosed by the subject application, the following functions and effects are provided. The clamp device does not have a chamber to which and from which high-pressure fluid is supplied and discharged each time the device is driven, such as a cylinder chamber provided in a known clamp device. In the clamp device, as the operating rod is moved manually or by an external force, the clamp rod is driven toward the base end side in the axial direction. Toward the leading end side that is the opposite side in the axial direction, the clamp rod is driven by the biasing member. Therefore, the clamp device does not require high pressure fluid.

In regard to the above, the operating rod drives the clamp rod toward the base end side, i.e., in the direction opposite to the direction toward the leading end side, against the biasing force of the biasing member. Therefore, when the biasing force of the biasing member is increased in order to maximize the driving force of driving the clamp rod toward the leading end side, it is necessary to also increase the manual force or external force acting on the operating rod. However, the clamp device of the subject application has the wedge mechanism consisting of the wedge surfaces (wedge portion), the engaging member, and the receiving surface, and the force applied to the operating rod is amplified by this wedge mechanism. Therefore, even if the biasing force of the biasing member is increased, it is not necessary to significantly increase the force acting on the operating rod. In conclusion, even if the driving force for driving the clamp rod toward the leading end side is increased, it is possible to drive the clamp rod toward the base end side, i.e., in the direction away from the leading end side, without significantly increasing the force applied to the operating rod.

(2) The clamp device of (1) may be arranged such that the biasing member 21 is a spring 21, and the spring 21 is mounted between the bottom surface of the cylindrical hole 12 and a leading end portion of the supporting cylinder member 4.

With this arrangement, the biasing force of the spring that is the biasing member is transmitted to the clamp rod and then to the clamp arm. Because the clamp rod is the only member interposed between the biasing member and the clamp arm in terms of power transmission, the loss of the biasing force of the spring can be minimized, and the driving force for driving the clamp rod toward the leading end side can be increased accordingly.

(3) The clamp device of (1) or (2) may further include an auxiliary spring 15 which is provided in the housing 1 and is configured to bias the operating rod 14 toward the base end side in the axial direction.

With this arrangement, the resistance force of the engaging member when the clamp rod moves toward the leading end side is eliminated, and hence the driving force of driving the clamp rod toward the leading end side is further increased.

(4) The clamp device of any one of (1) to (3) may be arranged such that the engaging member 18 is a spherical body 18, and the wedge surface 17a is an arc surface corresponding to the spherical body 18.

According to this arrangement, because the engaging member is a spherical body, it is possible to smoothly move the clamp rod toward the base end side. Furthermore, by making the wedge surface an arc surface, the stability of the retention of the spherical body by the wedge surface is enhanced, and hence the smooth movement of the clamp rod toward the base end side is ensured.

(5) The clamp device of any one of (1) to (4) may be arranged such that an inner circumferential part of a base end portion of the clamp rod 9, which slides on an outer circumferential surface of the supporting cylinder member 4, is arranged to be an annular protrusion 23a that protrudes in the axial direction.

According to this arrangement, the axial length of the part of the base end portion of the clamp rod, which slides on the outer circumferential surface of the supporting cylinder member, is increased, resulting in further stable movement of the clamp rod in the axial direction.

### [Advantageous Effects of Invention]

The present invention makes it possible to provide a clamp device which is driven without needing high-pressure fluid. Furthermore, according to the present invention, even if the driving force for driving the clamp rod toward the leading end side is increased, it is possible to drive the clamp rod toward the base end side, i.e., in the direction away from the leading end side, without significantly increasing the force applied to the operating rod.

### [Brief Description of Drawings]

FIG. 1 shows an embodiment of the present invention, and is a plan view of a clamp device in a clamping state.
FIG. 2 is a cross section taken along a line X-X in FIG. 1.
FIG. 3 is an arrow view taken along a line Y-Y in FIG. 1.
FIG. 4 is a sectional side view of the clamp device in an unclamping state shown in FIG. 1 to FIG. 3, and corresponds to FIG. 2.

### [Description of Embodiments]

An embodiment of the present invention describes an example of use of a clamp device, which is to fix a work pallet WP that is a clamping object to a clamping pallet CP that is a base member.

FIG. 1 to FIG. 4 show an embodiment of the present invention. Based on FIG. 1 to FIG. 4, the structure of the clamp device of this embodiment will be explained.

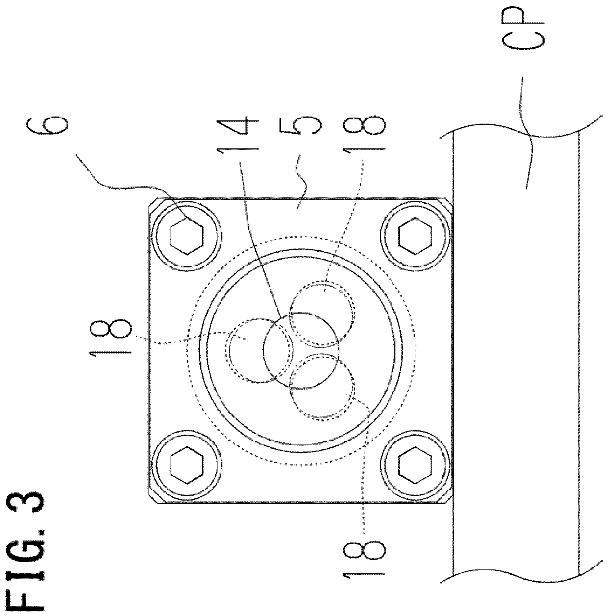

To the clamping pallet CP, a housing 1 of the clamp device is fixed in a horizontal posture by using bolts 2 (see FIG. 1). The housing 1 includes a housing main body 3, a supporting cylinder member 4, and a base end cylinder member 5. The supporting cylinder member 4 and the base end cylinder member 5 are fixed in this order to an end portion of the housing main body 3 in the longitudinal direction, by multiple bolts 6 (see FIGs. 1 and 3).

A clamp arm 7 is provided in an accommodating groove 3a formed at a leading end portion of the housing main body 3. A lower end portion of the clamp arm 7 is connected to both side surfaces of a lower part on the leading end side of the accommodating groove 3a through a pin 8, thereby allowing the clamp arm 7 to be swingable. By inserting a pin 10 into a long hole 7a formed in an intermediate height portion of the clamp arm 7 and into a leading end portion of the clamp rod 9, the clamp arm 7 is attached to the leading end portion of the clamp rod 9 through the pin 10. Due to this, the clamp arm 7 can be pushed and pulled by the clamp rod 9. A clamp part 11 is provided at an upper end portion of the clamp arm 7, and an inner side surface 11a of this clamp part 11 presses the work pallet WP.

The clamp rod 9 is inserted into the housing main body 3 to be movable in an axial direction. The clamp rod 9 has a cylindrical hole 12 that extends in the axial direction. Into this cylindrical hole 12, a cylindrical part 13 of the supporting cylinder member 4 is inserted. To a part which is inside the cylindrical hole 12 and is between the bottom surface of the cylindrical hole 12 and the leading end portion of the cylindrical part 13, a spring 21 is attached as a biasing member configured to move the clamp rod 9 toward the leading end side in the axial direction. A stepped portion 13a is provided at the leading end portion of the cylindrical part 13, and this stepped portion 13a functions as a spring receiver portion. The spring 21 is a compression coil spring. It is noted that the number of the springs 21 may not be one. For example, two or more springs with different diameters may be inserted to each other and provided inside the cylindrical hole 12. Alternatively, a spring of another type such as a disc spring may be employed in place of the compression coil spring.

The clamp rod 9 has a small diameter portion 22 on the leading end side and a large diameter portion 23 on the base end side. An inner circumferential part at the base end portion of the large diameter portion 23 is arranged to be an annular protrusion 23a that protrudes rearward in the axial direction.

Into the cylindrical hole 13b of the cylindrical part 13 which is part of the supporting cylinder member 4, an operating rod 14 is inserted. The operating rod 14 is a member used for moving the clamp rod 9 toward the base end side in the axial direction against the biasing force of the spring 21. Inside the base end cylinder member 5 which forms an axial end portion of the housing 1 and into which the operating rod 14 is inserted, an auxiliary spring 15 is provided to bias the operating rod 14 toward the base end side. A ring-shaped spring receiver 16 is fixed to the outer circumferential surface of the operating rod 14, and the auxiliary spring 15 is mounted between the end portion on the base end side of the cylindrical part 13 and the spring receiver 16 of the supporting cylinder member 4. The auxiliary spring 15 is provided only for moving the operating rod 14 toward the base end side, and its biasing force may be small. The auxiliary spring 15 is a compression coil spring. Alternatively, an auxiliary spring of another type such as a disc spring may be employed in place of the compression coil spring.

The clamp device has a wedge mechanism that is configured to convert the direction of the force when the operating rod 14 is pushed into the housing 1 to the direction of the force that moves the clamp rod 9 toward the base end side, and to amplify the converted force. The wedge mechanism is structured as follows.

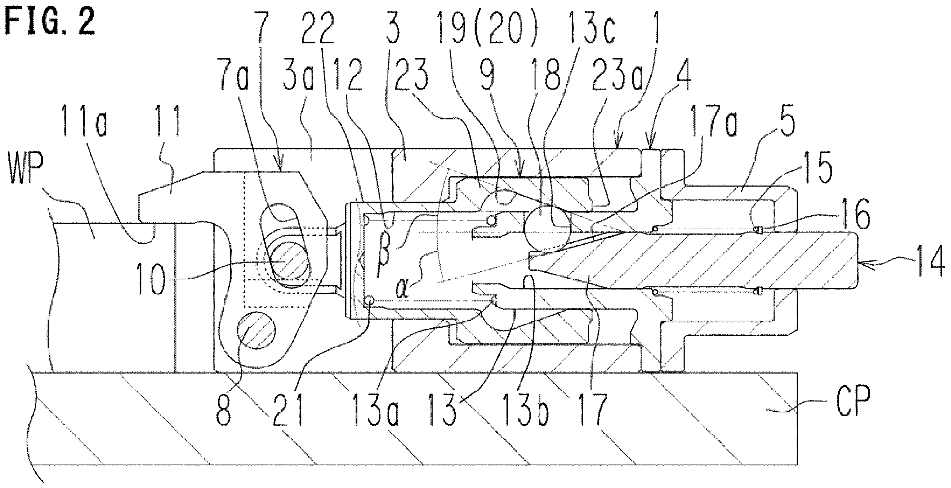

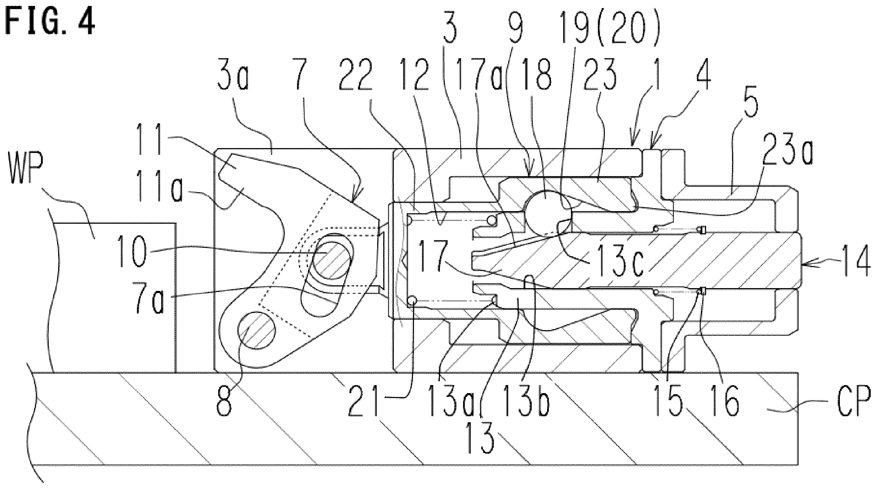

A wedge portion 17 tapering toward the leading end is provided at the leading end portion of the operating rod 14. Three wedge surfaces 17a are provided on the outer circumference of the wedge portion 17. The wedge surfaces 17a are inclined such that the leading end side of each surface is close to the axial center of the operating rod 14. Each of FIG. 2 and FIG. 4 shows only one of the three wedge surfaces 17a.

Three supporting holes 13c are formed in the cylindrical part 13 (cylindrical wall) of the supporting cylinder member 4 to extend in the radial direction of the cylindrical part 13, at predetermined intervals in the circumferential direction. Each of FIG. 2 and FIG. 4 shows only one of the three supporting holes 13c. Into each supporting hole 13c, a ball 18 (spherical body) that is an engaging member is inserted. The above-described wedge surface 17a has a groove shape and is an arc surface corresponding to the ball 18. That is, in a cross section orthogonal to the longitudinal direction, the wedge surface 17a is an arc in shape. The wedge surface 17a may not have a groove shape. That is, the groove in the outer circumferential surface of the wedge portion 17 may be eliminated, and the outer circumferential surface may be formed in a tapered shape.

In addition to the above, a receiving groove 19 corresponding to the ball 18 is formed in the cylindrical hole 12 of the clamp rod 9. A receiving surface 20 which is the inner circumferential surface of the receiving groove 19 is inclined such that a part of the receiving surface 20, which is on the base end side of the clamp rod 9, is close to the axial center of the clamp rod 9 as compared to a part of the receiving surface 20, which is on the leading end side of the clamp rod 9. The receiving surface 20 is a tapered surface (slope surface). The receiving surface 20 may be a curved surface.

An inclination angle α of the wedge surface 17a relative to the axial direction of the operating rod 14 is arranged to be smaller than an inclination angle β of the receiving surface 20 relative to the axial direction of the clamp rod 9. The axial direction of the clamp rod 9 is identical with the axial direction of the operating rod 14. Furthermore, the axial direction of the cylindrical part 13 of the supporting cylinder member 4 is identical with the axial direction of the clamp rod 9 and the operating rod 14.

Each of the number of wedge surfaces 17a, the number of supporting holes 13c, and the number of balls 18 is not limited to three. The number of wedge surfaces 17a may be one or plural. The same applies to the supporting holes 13c and the balls 18.

The above-described clamp device operates as follows.

In the unclamping state shown in FIG. 4, the operating rod 14 is being pushed into the housing 1 manually or by an external force. Due to this, the ball 18 is moved outward in the radial direction of the operating rod 14 by the wedge surface 17a of the wedge portion 17 of the operating rod 14, and the clamp rod 9 is moved toward the base end side in the axial direction by the ball 18. As a result, the clamp rod 9 swings the clamp arm 7 backward in a clockwise direction.

When the work pallet WP is clamped by the clamping pallet CP, the manual force or the external force applied to the operating rod 14 is released. To be more specific, for example, in the case of manual operation in which the operating rod 14 is pushed with a finger, the finger is released from the operating rod 14.

As a result, the operating rod 14 moves toward the base end side in the axial direction due to the biasing force of the auxiliary spring 15, and the end portion of the operating rod 14 protrudes from the housing 1 (base end cylinder member 5). Due to the movement of the operating rod 14 toward the base end side, the constraint of the ball 18 by the wedge surface 17a at a radially outward position is released, and the ball 18 is allowed to move radially inward inside the supporting hole 13c. As a result, the movement of the clamp rod 9 in the axial direction becomes no longer constrained by the ball 18. When the movement of the clamp rod 9 in the axial direction becomes no longer constrained, the clamp rod 9 moves toward the leading end side due to the biasing force of the spring 21, because the spring 21 pushes the bottom surface of the cylindrical hole 12 of the clamp rod 9**.** Due to this, the clamp rod 9 swings the clamp arm 7 counterclockwise. Then the clamp part 11 of the clamp arm 7 presses the work pallet WP from above. The clamp device is switched from the unclamping state shown in FIG. 4 to the clamping state shown in FIG. 2, etc.

When switching the clamp device from the clamping state shown in FIG. 2, etc. to the unclamping state shown in FIG. 4, the operating rod 14 is pushed into the housing 1 manually or by an external force.

Due to this, the ball 18 is moved outward in the radial direction of the operating rod 14 by the wedge surface 17a of the wedge portion 17 of the operating rod 14, and the ball 18 moves the clamp rod 9 toward the base end side in the axial direction through the intermediary of the receiving surface 20. As a result, the clamp rod 9 swings the clamp arm 7 backward in a clockwise direction, and the clamp device is switched to the unclamping state shown in FIG. 4**.** Because the inclination angle α of the wedge surface 17a is arranged to be smaller than the inclination angle β of the receiving surface 20, the manual force or external force applied to the operating rod 14 is amplified (increased).

The clamp device of the above-described embodiment has the following advantages.

The clamp device does not have a chamber to which and from which high-pressure fluid is supplied and discharged each time the device is driven, such as a cylinder chamber provided in a known clamp device. In the clamp device, as the operating rod 14 is moved manually or by an external force, the clamp rod 9 is driven toward the base end side in the axial direction. Toward the leading end side that is the opposite side in the axial direction, the clamp rod 9 is driven by the spring 21. Therefore, the clamp device does not require high pressure fluid such as pressure oil or compressed air for the drive. An action caused by an external force indicated in the phrase "the operating rod 14 is moved by an external force" is, for example, as follows. Examples of the action include: moving the operating rod 14 by hitting an object on the operating rod 14; and moving the operating rod 14 by hitting the operating rod 14 on a stationary object by moving the clamp device. The manual operation indicates moving the operating rod 14 with a human hand (such as a finger).

The operating rod 14 performing the unclamping drive drives the clamp rod 9 toward the base end side, i.e., in the direction opposite to the direction toward the leading end side, against the biasing force of the spring 21. Therefore, when the biasing force of the spring 21 is increased in order to maximize the driving force of driving the clamp rod 9 toward the leading end side, i.e., to maximize the force of the clamping drive, it is necessary to also increase the manual force or external force acting on the operating rod 14 required for the unclamping drive. However, the clamp device has the wedge mechanism consisting of the wedge surfaces 17a (wedge portions 17), the balls 18, and the receiving surfaces 20, and the force applied to the operating rod 14 is amplified by this wedge mechanism. Therefore, even if the biasing force of spring 21 is increased, it is not necessary to significantly increase the force acting on the operating rod 14**.** In conclusion, even if the force for the clamping drive is increased, it is possible to perform the unclamping drive of the clamp rod 9 without significantly increasing the force applied to the operating rod 14**.**

In the clamp device of the above-described embodiment, the spring 21 is mounted between the bottom surface of the cylindrical hole 12 of the clamp rod 9 and the leading end portion of the cylindrical part 13 of the supporting cylinder member 4. With this arrangement, the biasing force of the spring 21 is transmitted to the clamp rod 9 and then to the clamp arm 7. Because the clamp rod 9 is the only member interposed between the spring 21 and the clamp arm 7 in terms of power transmission, the loss of the biasing force of the spring 21 can be minimized, and the force for the clamping drive can be increased accordingly.

In addition to the above, the clamp device is provided with the auxiliary spring 15 that biases the operating rod 14 toward the base end side in the axial direction. With this arrangement, the resistance force of the ball 18 when the clamp rod 9 moves toward the leading end side is eliminated, and hence the clamp driving force is further increased.

The present invention is not limited to the embodiment above, and it is possible to suitably combine the elements of the embodiment or to make various modifications to the embodiments above as long as it does not depart from the spirit of the present invention.

For example, the above-described embodiment is changeable as follows.

The installation posture of the clamp device is not limited to the horizontal posture. The installation posture of the clamp device may be a vertical posture or an oblique posture.

A roller (cylindrical body) may be used as an engaging member in place of the ball 18 (spherical body).

In the embodiment above, a clamping object is clamped by moving the clamp rod 9 toward the leading end side in the axial direction, and is unclamped by moving the clamp rod 9 toward the base end side, i.e., in the opposite direction. On the contrary, a clamping object may be unclamped by moving the clamp rod 9 toward the leading end side in the axial direction, and may be clamped by moving the clamp rod 9 toward the base end side, i.e., in the opposite direction.

While the clamp arm 7 is swingable, a clamp arm attached to the leading end portion of clamp rod 9 may not be swingable. For example, a clamp arm that is rectangular parallelepiped in shape and is not swingable may be attached to the leading end portion of the clamp rod 9**.**

The clamp device may be attached to a table or a leading end portion of a robot. The clamping object may be a workpiece or a mold.

### [Reference Signs List]

1: housing, 3: housing main body, 4: supporting cylinder member, 9**:** clamp rod, 12: cylindrical hole, 13c: supporting hole, 14: operating rod, 15: auxiliary spring, 17: wedge portion, 17a: wedge surface, 18: ball (engaging member, spherical body), 20: receiving surface, 21: spring (biasing member), 23a: annular protrusion, α: inclination angle, β: inclination angle

## Claims

1. A clamp device comprising:
a housing (1);
a clamp rod (9) which is inserted into a housing main body (3) of the housing (1) to be movable in an axial direction, the clamp rod (9) having a cylindrical hole (12) extending in the axial direction;
a clamp arm (7) which is attached to a leading end portion of the clamp rod (9);
an operating rod (14) which is inserted into a supporting cylinder member (4) that is part of the housing (1), which has a wedge portion (17) formed at a leading end portion, and which is configured to move the clamp rod (9) toward a base end side in the axial direction;
supporting holes (13c) which are formed in a cylindrical wall of the supporting cylinder member (4) inserted into the cylindrical hole (12), at predetermined intervals in a circumferential direction;
an engaging member (18) which is inserted into each of the supporting holes (13c);
a wedge surface (17a) which is formed on the outer circumference of the wedge portion (17) to correspond to the engaging member (18), the wedge surface (17a) being inclined such that a leading end side of the wedge surface (17a) is close to the axial center of the operating rod (14);
a receiving surface (20) which is formed in the cylindrical hole (12) to correspond to the engaging member (18), the receiving surface (20) being inclined such that a part of the receiving surface (20), which is on the base end side of the clamp rod (9), is close to the axial center of the clamp rod (9) as compared to a part of the receiving surface (20), which is on the leading end side of the clamp rod (9);
and
a biasing member (21) which is provided in the cylindrical hole (12) and is configured to move the clamp rod (9) toward the leading end side in the axial direction,
an inclination angle (α) of the wedge surface (17a) relative to the axial direction being arranged to be smaller than an inclination angle (β) of the receiving surface (20) relative to the axial direction.

2. The clamp device according to claim 1, wherein,
the biasing member (21) is a spring (21), and
the spring (21) is mounted between the bottom surface of the cylindrical hole (12) and a leading end portion of the supporting cylinder member (4).

3. The clamp device according to claim 1 or 2, further comprising:
an auxiliary spring (15) which is provided in the housing (1) and is configured to bias the operating rod (14) toward the base end side in the axial direction.

4. The clamp device according to any one of claims 1 to 3,
wherein,
the engaging member (18) is a spherical body (18), and
the wedge surface (17a) is an arc surface corresponding to the spherical body (18).

5. The clamp device according to any one of claims 1 to 4,
wherein,
an inner circumferential part of a base end portion of the clamp rod (9), which slides on an outer circumferential surface of the supporting cylinder member (4), is arranged to be an annular protrusion (23a) that protrudes in the axial direction.
